(19) Europäisches Patentamt

European Patent Office

Office européen des brevets

(11) **EP 0 660 209 B2**

(12) **NEUE EUROPÄISCHE PATENTSCHRIFT**

(45) Veröffentlichungstag und Bekanntmachung des Hinweises auf die Entscheidung über den Einspruch:
**14.06.2006 Patentblatt 2006/24**

(45) Hinweis auf die Patenterteilung:
**30.10.1996 Patentblatt 1996/44**

(21) Anmeldenummer: **94119466.4**

(22) Anmeldetag: **09.12.1994**

(51) Int Cl.:
***G05B 19/414*** (2006.01)

(54) **Vorrichtung und Verfahren zur seriellen Datenübertragung zwischen einer Positionsmesseinrichtung und einer Verarbeitungseinheit**

Method and device for serial transmission of data between a position sensing means and a data processing unit

Méthode et dispositif pour la transmission en série de données entre un appareil de mesure de position et une unité de traitement de données

(84) Benannte Vertragsstaaten:
**AT CH DE FR GB IT LI**

(30) Priorität: **13.12.1993 DE 4342377**

(43) Veröffentlichungstag der Anmeldung:
**28.06.1995 Patentblatt 1995/26**

(73) Patentinhaber: **Dr. Johannes Heidenhain GmbH
83292 Traunreut (DE)**

(72) Erfinder:
• **Hagl, Rainer, Dr.**
  **D-83352 Altenmarkt (DE)**
• **Bielski, Steffen**
  **D-84518 Garching/Alz (DE)**
• **Hofbauer, Hermann**
  **D-83308 Trostberg (DE)**
• **Wastlhuber, Robert**
  **D-84518 Garching/Alz (DE)**
• **Strasser, Erich**
  **D-83308 Trostberg (DE)**

(56) Entgegenhaltungen:
EP-A- 0 142 112          EP-A- 0 171 579
DE-A- 3 936 452          DE-A- 4 129 577
US-A- 4 912 476

• **AUTOMATISIERUNGSTECHNISCHE PRAXIS - ATP, Bd. 33,Nr. 7, Juli 1991 MUNCHEN DE, Seiten 363-368, XP 000243095 RALPH KENNEL & RUPERT WEBER 'Datenkommunikation über das Bussystem "SERCOS interface" , Auswirkungen auf Antriebsregelung in Werkzeugmaschinen'**
• **ELEKTRONIK, Bd. 41,Nr. 20, 29.September 1992 , MUNCHEN, DE, Seiten 66-73, XP 000311737 ROLAND RUESS 'Sercos-Interface auch für Sensoren und Aktoren'**
• **ADVANCES IN INSTRUMENTATION AND CONTROL, Bd. 48, 1993 RESEARCH TRIANGLE PARK US, Seiten 829-841, XP 000435389 JAMES J. PINTO '"Chicken-Brain" I/O - Architecture for "Truly" Distributed Control'**
• **SINCOS-Datenblattentwurf SCS/M 70 A vom 15.03.93**
• **Produktinformation des SINCOS-Systems vom 15.06.92**
• **Übersicht der Sincosgebertypen der Baureihe 70 vom 31.09.93**
• **Datenblattversion SCS/M70A vom 15.03.93**
• **Datenblattversion SCS/M70B vom 01.10.93**

EP 0 660 209 B2

**Beschreibung**

Die Erfindung betrifft eine Vorrichtung und ein Verfahren zur seriellen Datenübertragung zwischen einer Positionsmeßeinrichtung und einer Verarbeitungseinheit, insbesondere einer NC-Steuerung.

Aus der EP-0 171 579 B1 ist eine derartige Anordnung bekannt. Die Positionsmeßwerte der Positionsmeßeinrichtung werden synchron zu einem von einer Verarbeitungseinheit vorgegebenen Takt an diese Verarbeitungseinheit übertragen.

Nachteilig bei dieser Anordnung ist vor allem, daß die Verarbeitungseinheit.vom Anwender aufwendig an die spezifischen Parameter der Positionsmeßeinrichtung angepaßt werden muß. So ist beispielsweise die Taktanzahl, die zurvollständigen Übertragung eines Positionsmaßwertes erforderlich ist, abhängig von der Auflösung der Positionsmeßeinrichtung. Bisher wurde von der Verarbeitungseinheit eine feste Taklanzahl (z.B.13) vorgegeben. Wird nun eine Positionsmeßeinrichtung mit geringer Auflösung (z.B. 5 Bit) eingesetzt, dann werden trotzdem die 13 Takte zur Meßwertübertragung verwendet. Es ist ersichtlich, daß dabei unnötige Übortragungszeit verbraucht wird.

Aus der DE 39 36 452 Al ist ein Verfahren zum Anpassen einer numerischen Steuerung an spezifische Parameter einer Positionsmeßeinrichtung bekannt. Dabei werden die spezifischen Parameter in einem Informationsträger abgespeichert und während eines Probelautes an die Steuerung übertragen.

In der. DE 41 29 577 Al ist eine Positionsmeßeinrichtung bekannt, in der ein Datenspeicher mit systemspezifischen Daten integriert ist Die Ausgänge des Datenspeichers sowie die'Ausgänge der Abtasteinheiten sind zeitweise auf Übertragungsleitungen aufschaltbar. Nachteilig ist dabei, daß die Synchronisation zwischen der Meßeinrichtung und der Auswerteeinheit nicht gewährleistet ist. Weiterhin muß der Absolutwert erst in der Verarbeitungseinheit generiert werden, beispielsweise durch arctan-Bildung, was den Aufwand in der Verarbeitungseinheit erhöht. Nachteilig ist auch, daß zur Übertragung Multiplexer benötigt werden. Das Senden von Parametern ist ausschließlich beim Einschalten der Versor ungsspannung der Meßeinrichtung vorgesehen. In einer Produkt beschreibung "SINCOS", Ausgabe 15.03.1993 der Firma Stegmann ist eine Positions meßeinrichtung mit bidirektionaler Schnittstelle und mehreren über diese beschreib- und lesbaren Speicherbereichen beschrieben.

Der Erfindung liegt daher die Aufgabe zugrunde, die Anpassung der Verarbeitungseinheit an spezifische Parameter der Positionsmeßeinrichtung zu optimieren und den Aufwand an Übertragungsleitungen zwischen der Positionsmeßeinrichtung und der Verarbeitungseinheit zu minimieren.

Diese Aufgabe wird durch die Merkmale des Anspruches 1 und des Anspruches 7 gelöst.

Vorteilhafte Ausgestaltungen sind in den abhängigen Ansprüchen angegeben.

Die besonderen Vorteile der Erfindung liegen darin, daß die spezifischen Parameter der Positionsmeßeinrichtung selbständig von der Verarbeitungseinheit übernommen werden können, wobei zur Übertragung dieser Parameter die gleichen Leitungen verwendet werden, die bereits zur Meßwertübertragung vorhanden sind. Weiterhin ist eine sichere Übertragung gewährleistet.

Nachfolgend wird die Erfindung anhand eines in der Zeichnung dargestellten Ausführungsbeispiefes näher erläutert:

Es zeigen:

Figur 1    eine Prinzipdarstellung einer Anordnung zur seriellen Datenübertragung einer Winkelmeßeinrichtung,

Figur 2    ein Übertragungsprotokoll zur Parameterübertragung,

Figur 3    schematisch die Abfolge der synchron seriellen Datenübertragung in einem Impuls-Zeit-Diagramm,

Figur 4    eine weitere Abfolge der Datenübertragung,

Figur 5    die Datenübertragung mit unterbrochenem Takt,

Figur 6    die Datenübertragung mit durchlaufendem Takt und

Figur 7    eine Schaltung zur bidirektionalen Datenübertragung.

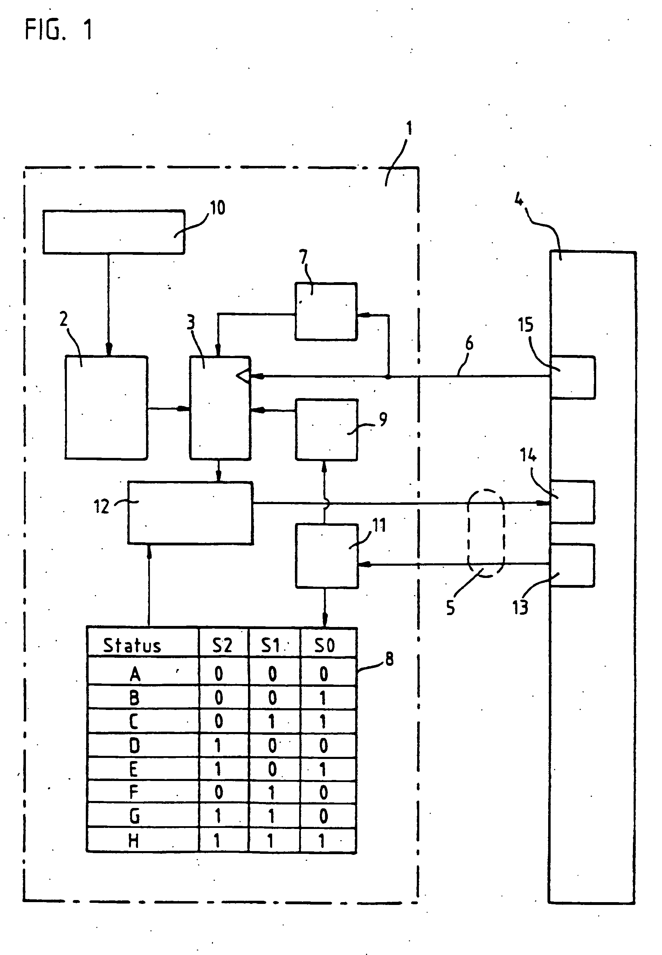

In dem in Figur 1 dargesteilten Ausführungsbeispiel ist mit dem Bezugzeichen 1 eine Winkelmeßeinrichtung bezeichnet, welche die jeweilige absolute Wirikelsteilung als Binär-Datenwort (Dualcode) an eine Verarbeitungseinheit 4 überträgl Durch bekannte lichtelektrische Ablastung einer Codescheibe oder mehrerer über Untersetzungsgetriebe miteinander verbundener Codescheiben (Multitum) werden von einer Abtasteinrichtung 10 analoge Abtastsignale erzeugt, die einem Baustein 2 zugeführt werden. In diesem Baustein 2 werden die Abtastsignale verstärkt und in Digitalsignale zu einem Binär-Datenwort umgewandelt. Der Baustein 2 gewährleistet, daß unabhängig vom vorliegenden Code der Codescheiben am Ausgang immer der vollständige absolute Positionswert ansteht. Der Code der Codescheiben kann als Gray-Code oder aus mehreren Inkrementalspuren mit definiert unterschiedlicher Teilungsperiode (DE 41 25 B65 Al) ausgebildet sein.' Der Baustein 2 kann auch zur Korrektur der Analog- oder Digitalsignale dienen, ebenso werden im Baustein 2 notwendige Berechnungen durchgeführt, die zum korrekten Anschluß bzw. zur korrekten Kombination mehrerer Codespuren.bzw. Gruppen von Codespuren erforderlich sind. Diese Berechnungen sind beispielsweise in der DE 27 58 525 B1, der DE 29 38 31 8 C3 oder der DE 37 34 938 C2 ausführlich beschrieben.

Der absolute Positionsmeßwert wird einem Parallel-Serien-Wandler 3 als Ausgabebaustein zugeführt, der gesteuert von einer Taktimpulsfolge die einzelnen Bits des den absoluten Positionsmeßwert bestimmenden Datenwortes seriell über die Datenleitung 5 an die Verarbeitungseinheit 4 sendet. Besonders vorteilhaft ist es dabei, wenn die Taktimpulsfolge von der Verarbeitungseinheit 4 vorgegeben wird. Zur Übertragung der Taktimpulse von der Verarbeitungseinheit 4 zur Winkelmeßeinrichtung 1 ist eine Taktleitung 6 vorgesehen. Die Übertragung des Positionsmeßwertes erfolgt mittels einer retriggerbaren Zeitstufe 7, wie in der EP 0 171 579 B1 ausführlich er.läutert ist, auf die ausdrücklich Bezug genommen wird.

Erfindungsgemäß werden über die Datenleitung 5 auch Befehle von der Verarbeitungseinheit 4 zu der Positionsmeßeinrichtung 1 übertragen. Die Befehle werden einem Speicher 8 der Positionsmeßeinrichtung 1 zugeführt, der den Befehl dekodiert und die Positionsmeßeinrichtung 1 veranlaßt, den entsprechenden Befehl auszuführen. Dieser Befehl ist im Beispiel ein Datenwort aus drei Status-Bits S2 S1 und SO. Zur Sicherung der Übertragung von Status-Befehlen wird jedes Status-Bit auch invertiert übertragen, so daß insgesamt sechs Status-Bits S2, S1, S0, $\overline{S2}$, $\overline{S1}$, $\overline{S0}$ für einen Befehl von der Verarbeitungseinheit 4 zur Positionsmeßeinrichtung 1 übertragen werden. Erkennt die Positionsmeßeinrichtung 1 eine fehlerhafte Status-Bit-Übertragung, so erfolgt eine Fehlermeldung.

Die Positionsmeßeinrichtung 1 wird nachfolgend nur als Meßsystem bezeichnet.

Im Beispiel sind acht Status-Befehle A bis H angegeben, die nachfolgend im Detail beschrieben werden:

1. Statusbefehl A:

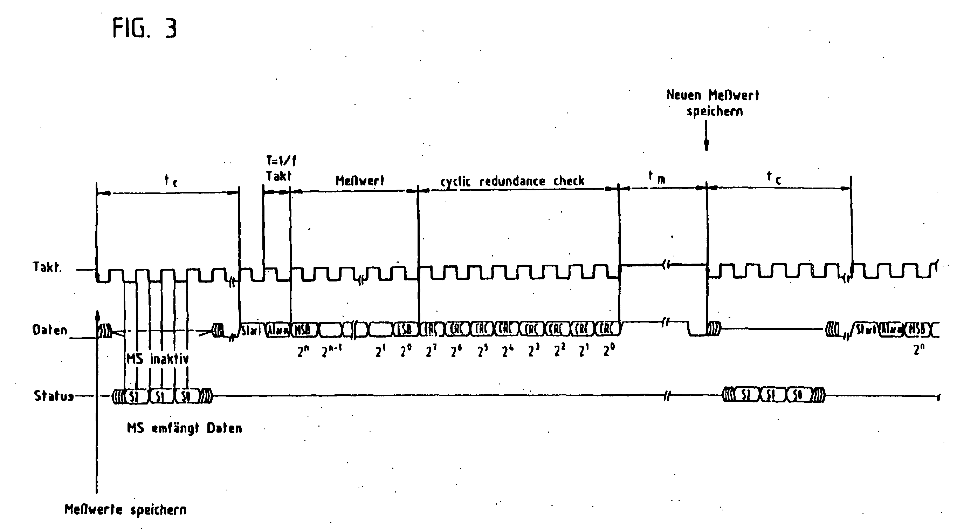

Wird von der Verarbeitungseinheit 4 das Datenwort A an die Positionsmeßeinrichtung 1 über die Datenleitung 5 gesendet, bedeutet dies, daß die Meßeinrichtung 1 damit aufgefordert wird, einen absoluten Positionsmeßwert an die Verarbeitungseinheit 4 zu senden. Das Übertragungsprotokoll hierzu ist in den Figuren 3 bis 6 dargestellt und wird später ausführlich beschrieben.

2. Statusbefehl B:

Mit diesem Befehl wird die Auswahl eines Speicherbereiches veranlaßt. Die Meßeinrichtung 1 beinhaltet einen Speicher 9, in dem Parameter der Meßeinrichtung 1 abgelegt werden können. Weitere Speicher oder Speicherbereiche können für Korrekturwerte vorgesehen werden. Ebenso ist es möglich, im Speicher 9 einen Bereich vorzusehen, in dem der Anwender spezifische Anwenderparameter, z.B. Motordaten ablegt. Besonders vorteilhaft ist es, wenn der Speicher 9 derart aufgeteilt ist, daß der Bereich mit den Parametern des Meßsystemes 1 nur vom Meßsystemhersteller beschrieben werden kann, und ein weiterer Bereich für den Anwender frei zugänglich (beschreibbar und lesbar) ist. Der Bereich mit den Parametern des Meßsystemherstellers kann wiederum aufgeteilt sein, und zwar in einen Bereich der vom Anwender lesbar und einen Bereich, der ausschließlich vom Meßsystemhersteller lesbar ist.

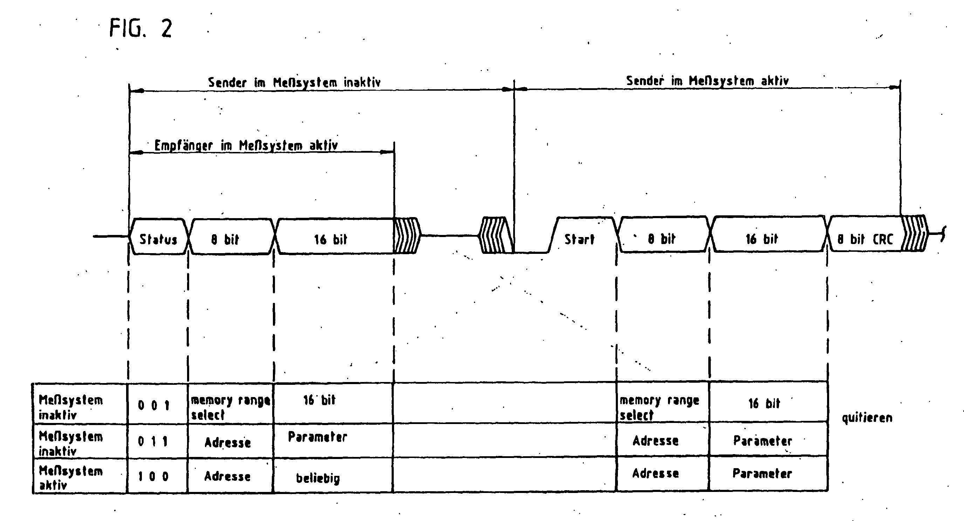

Wie in Figur 2 ersichtlich, wird zum Lesen bzw. Schreiben von Parametern zunächst mit dem Befehl B die Speicherauswahl aktiviert. Nach dem Befehl B wird ein 16 Bit Datenwort (Memory Range Select Code) von der Verarbeitungseinheit 4 zum Meßsystem 1 gesendet, um einen Bereich des Speichers 9 auszuwählen. Der Befehl wird vom Meßsystem quittiert.

3. Statusbefehl C:

Ist mit dem Befehl B ein bestimmter Speicherbereich angewählt, wird mit diesem Befehl C der Meßeinrichtung 1 mitgeteilt, daß nachfolgend unter einer bestimmten Adresse Parameter dem Meßsystem 1 zugeführt werden. Das heißt, daß nach diesem Statusbefehl C zuerst die Adresseninformation, unter der die Parameter abzuspeichern sind, und nachher die Parameterinformation von der Verarbeitungseinheit 4 über die Datenleitung 5 der Meßeinrichtung 1 zugeführt werden.

4. Statusbefehl D:

Ist mit dem Befehl B ein bestimmter Speicherbereich angewählt, wird mit diesem Befehl D der Meßeinrichtung 1 mitgeteilt, daß die Verarbeitungseinheit 4 das Senden von abgespeicherten Parametern der Meßeinrichtung 1 erwartet. Von der Verarbeitungseinheit 1 wird zusätzlich die Adresse angegeben, wo diese Parameter in der Meßeinrichtung 1 abgespeichert sind.

5. Statusbefehl E:

Mit diesem Befehl E können vorgegebene Bereiche des Speichers 9 auf Veranlassung der Verarbeitungseinheit 4 gelöscht werden.

6. Statusbefehle F bis H:

Diese Befehle sind vorteilhaft zum Testen der Meßeinrichtung 1 reserviert. Somit ist es beispielsweise möglich, daß ein Meßsystem 1 mit integrierter Fehlerüberwachung über weite Entfernungen getestet und der Fehler diagnostiziert werden kann. Beispielsweise kann nach dem Befehl F der Verarbeitungseinheit 4 unter einer vorgegebenen Adresse eines Speicherbereiches des Speichers 9 nachgesehen werden, ob dort eine Fehlermeldung abgespeichert ist. Diese Fehlermeldung wird nachfolgend vom Meßsystem 1 zur Verarbeitungseinheit 4 über die Datenleitung 5 gesendet.

In Figur 2 ist das Übertragungsprotokoll der Parameterübertragung dargestellt. Es ist ersichtlich, daß in der Zeit, in der die Statusbits, die Adressen sowie die Parameter von der Verarbeitungseinheit 4 gesendet werden, der Empfänger 11 im Meßsystem 1 aktiv und der Sender 12 im Meßsystem 1 inaktiv ist. Ebenso ist ersichtlich, daß die übertragenen Daten bei den Befehlen B und C durch zurücksenden dieser Daten an die Verarbeitungseinheit 4 quittiert werden. Wird in der Verarbeitungseinheit 4 festgestellt, daß sich die gesendeten Daten von den empfangenen Daten unterscheiden, wird die Übertragung wiederholt. Vom Meßsystem 1 wird außer den Daten noch ein 8 bit CRC übertragen. CRC bedeutet cyclic redundänce check, dieses Datenwort wird durch eine bekannte Verknüpfung der Datenbits gewonnen. Diese Übertragung des CRC ermöglicht der Verarbeitungseinheit 4 eine Überprüfung, ob die Datenübertragung fehlerfrei erfolgt ist. Aus Gründen der Übersichtlichkeit sind in Figur 2 die invertierten Status-Bits nicht dargestellt.

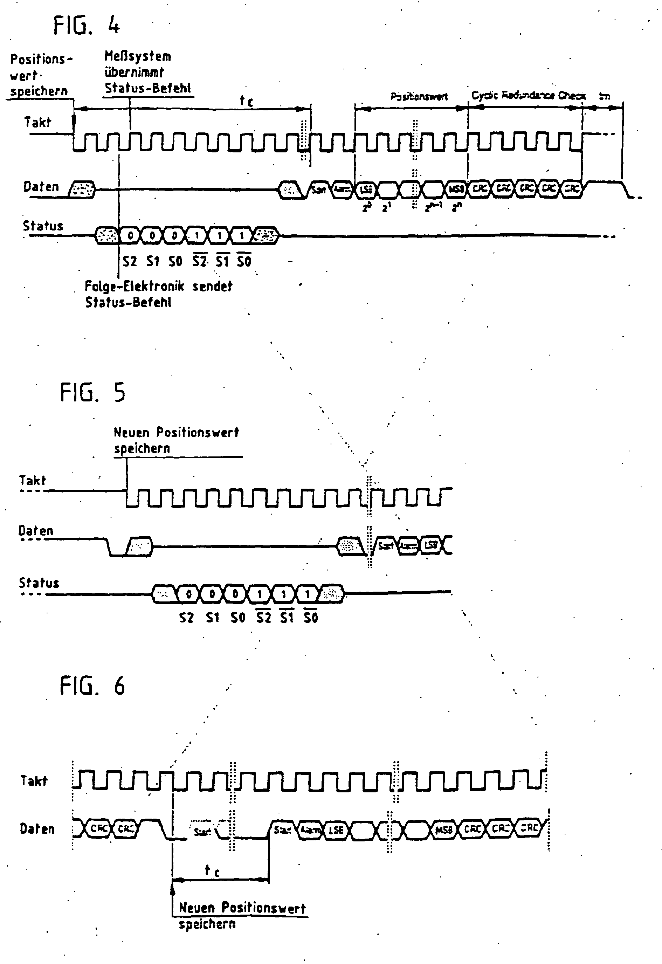

In Figur 1 ist mit 13 der Sender und mit 14 der Empfänger der Verarbeitungseinheit 4 bezeichnet. Ebenso ist ersichtlich', daß der Taktgeber 15 in der Verarbeitungseinheit 4 untergebracht ist. Die Verarbeitungseinheit 4 oder Folgeelektronik ist vorzugsweise eine NC-Steuerung. Zum besseren Verständnis sind in Figur 1 für die Datenleiturig 5 zwei Wege eingezeichnet. Gemäß der Erfindung werden die Daten in beiden Richtungen aber auf der gleichen Leitung 5 also bidirektional übertragen, wie auch in Figur 4 im Detail dargestellt ist.

In den Figuren 3 bis 6 sind Impulsdiagramme zur Übertragung des Positionsmeßwertes der Meßeinrichtung 1 dargestellt. Während des Ruhezustandes ist die Datenleitung 5 auf LOW. Von der Verarbeitungseinheit 4 ist daher erkennbar, daß es sich bei der angeschlossenen Positionsmeßeinrichtung 1 um die erfindungsgemäße Anordnung handelt, da die Datenleitung im Ruhezustand bei einer Anordnung gemäß-der EP 0 171 579 B1 auf HIGH ist.

Bei der ersten negativen Taktflanke werden die Analogwerte der Abtasteinrichtung 10 in den Baustein 2 abgespeichert. Wenn die erforderlichen Berechnungen im Baustein 2 abgeschlossen sind, was durch die Rechenzeit tc angegeben ist, wird von der Meßeinrichtung 1 ein Startsignal in Form eines Startbits an die Verarbeitungseinheit 4 gegeben, und zwar synchron zu einer positiven Taktflanke. Die Zeit tc ist variabel und abhängig vom Umfang der Berechnungen. Das Startbit zeigt an, daß ein gültiger Positionsmeßwert zur Übertragung vorliegt.

Nach dem Startbit wird ein Alarmbit übertragen. Das Alarmbit meldet eine Fehlfunktion der Meßeinrichtung 1 an die Verarbeitungseinheit 4. Eine Fehlermeldung wird dann abgegeben, wenn im Speicher 9 eine Fehlermeldung.abgespeichert ist. Die Ursache für den Alarm kann aus dem Speicher 9 ausgelesen werden.

Mit der nachfolgenden positiven Taktflanke werden die am Parallel-Serien-Wandler 3 anstehenden Datenbits des Meßwertes seriell vom Sender 12 über die Datenleitung 5 zur Verarbeitungseinheit 4 übertragen. Die Länge des Meßwertes, das heißt, die notwendige Taktanzahl wurde der Verarbeitungseinheit 4 vor der Übertragung als Parameter aus dem Speicher 9 mitgeteilt. Zur Überprüfung der Meßwertübertragung wird zusätzlich ein CRC (cyclic redundance check) übertragen. Die Bildung eines CRC ist aus der Datenverarbeitung bekannt.

Beim Ausführungsbeispiel gemäß Figur 3 wird zuerst das MSB und als Letztes das LSB des Meßwertes übertragen. Bei den Ausführungbeispielen gemäß den Figuren 4 bis 6 dagegen zuerst das LSB. In den Figuren 4 und 5 sind auch die invertierten Status-Bits dargestellt. Wenn zuerst das LSB übertragen wird, kann eine schnelle bitserielle binäre Subtraktion und Addition bei der Nullpunktverschiebung ohne viel Aufwand während der Übertragung realisiert werden. Weiterhin hat diese Übertragung Vorteile bei Codewertanschlußberechnungen gemäß der DE 27 58 525 B1, DE 29 38 318 C3, DE 37 34 938 C2, da der gröber auflösende Codewert vom feiner auflösenden Codewert abhängig ist..

Nach einer bestimmten Zeit tm erfolgt erneut eine Meßwertspeicherung und Übertragung. Dabei wird wieder während der Rechenzeit tc die Statusinformation von der Verarbeitungseinheit 4 an die Meßeinrichtung 1 gesendet.

Bei der Übertragung des Positionsmeßwertes wird zwischen unterbrochenem und durchlaufendem Takt unterschieden. Zur Verdeutlichung sind diese zwei Betriebsarten in den Figuren 5 und 6 im Detail dargestellt. Der unterbrochene Takt gemäß Figur 5 zeichnet sich dadurch aus, daß der Takt nach der CRC-Übertragung bis zur Speicherung eines neuen Positionsmeßwertes aussetzt. Vor jeder Übertragung eines Positionsmeßwertes an die Verarbeitungseinheit 4 wird von der Verarbeitungseinheit 4 ein Status-Befehl gesendet Der unterbrochene Takt ist insbesondere für Systeme bestimmt, welche zeitlich getaktet sind wie z.B. Regelkreise. Soll in möglichst kurzer Zeit wieder ein Meßwert übertragen werden, ist es auch möglich die Betriebsweise nach Figur 6 "durchlaufender Takt" zu wählen. Dabei wird die Wartezeit tm sowie die Zeit zur Übertragung der Statusinformation eingespart. Die zuletzt übertragene Statusinformation wird in der Verarbeitungseinheit 4 als aktuelle Statusinformation herangezogen.

Wie aus den Figuren 3 bis 6 ersichtlich ist, sendet die Verarbeitungseinheit 4 jeweils ein Status-Bit synchron zur fallenden Taktflanke. Eine Übernahme des Status-Bit vom Meßsystem 1 erfolgt synchron zur steigenden Taktflanke.

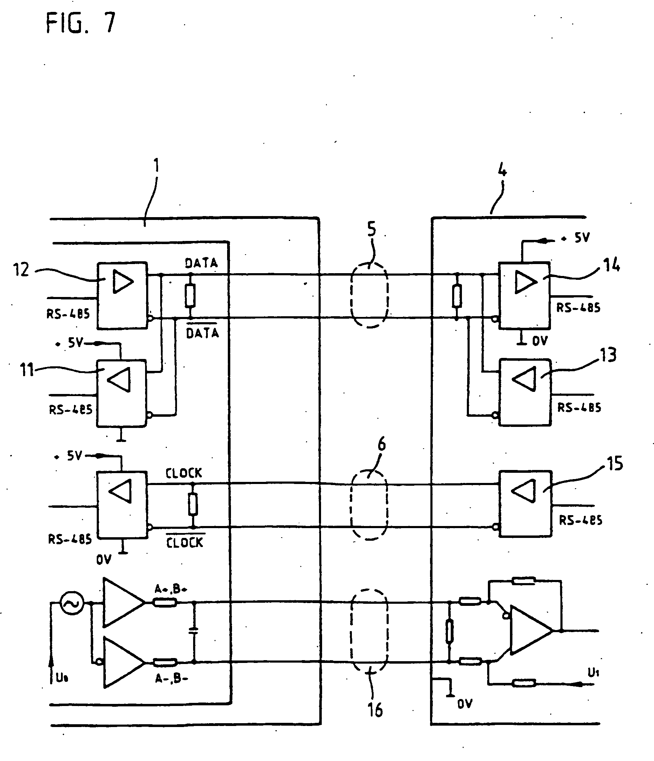

Damit die Anordnung zur seriellen Übertragung für möglichst viele Meßeinrichtungen einsetzbar ist, sind zusätzlich zu der Datenleitung 5 und Taktleitung 6 noch weitere Leitungen 16 zur Übertragung von analogen oder binären Zählsignalen einer inkrementalen Positionsmeßeinrichtung vorgesehen (Figur 7). Somit ist es möglich, parallel zu der absoluten Meßwertübertragung auf der Datenleitung 5 auch die Zählsignale auf der Leitung 16 zur Verarbeitungseinheit 4 zu senden. In Figur 7 ist auch ersichtlich, daß die bidirektionale Übertragung von Daten (Meßwerte und Parameter) zwischen der Meßeinrichtung 1 und der Verarbeitungseinheit 4 mit Signalpegeln nach RS485 (Differenzsignale) synchron zu einem von der Verarbeitungseinheit 4 vorgegebenen Taktsignal (CLOCK) erfolgt. Die Taktfrequenz liegt dabei zwischen 100KHz und 2MHz.

Wie bereits erwähnt, ermöglicht der Speicher 9 in der Meßeinrichtung 1 sowohl dem Kunden als auch dem Hersteller der Meßeinrichtung 1, Parameter abzuspeichern und auszulesen. Vorteilhaft ist es, wenn der Speicher 9 in mehrere Bereiche aufgeteilt ist:

    I. Speicherbereich für Parameter des Kunden
    II. Speicherbereich für Parameter des Meßsystem-Herstellers
    III. Speicherbereich für Korrekturwerte.

Der Speicherbereich des Meßsystem-Herstellers ist schreibgeschützt. Die einzelnen Speicherbereiche werden durch den Code "Memory Range Select" unterschieden.

Die Speicher können folgendermaßen belegt werden:

I. Speicherbelegung Parameter des Kunden:

**1. Nullpunkts-Verschiebung**

Der Wert wird vom Nullpunkt des Meßsystemes 1 subtrahiert.

II. Speicherbelegung Parameter des Meßsystem-Herstellers:

Diese Parameter können durch die Herstellung fest vorgegebene Daten beinhalten, aber zusätzlich auch Informationen über den Betriebszustand sowie über Betriebsparameter.

**1. Version**

Gibt die Version an, nach welcher der Speicher

9 aufgeteilt ist.

**2. Speichergröße**

Angabe der Größe der einzelnen Bereiche des Speichers 9.

**3. Übertragungsformat**

Gibt die Anzahl der Takte zur Übertragung eines Meßwertes (Datenwort) an.

**4. Meßsystem-Typ**

Gibt an, ob ein inkrementales Längen- oder Winkelmeßsystem mit oder ohne abstandscodierten Referenzmarken bzw. ob ein Singietum- oder Muttiturn-Codedrehgeber verwendet wird.

**5. Signalperiode bzw. Signalperioden pro Umdrehung**

Gibt die Breite einer Signalperiode bei Längenmeßsystemen bzw. die Anzahl der Signalperioden pro Umdrehung bei Winkelmeßsystemen an.

**6. Anzahl unterscheldbarer Umdrehungen**

Bei Multiturn-Codewinkelmeßsystemen erfolgt die Angabe der unterscheidbaren Umdrehungen.

**7. Grundabstand bel abstandscodierten Referenzmarken oder Abstand zweier benachbarter Referenzmarken**

Bei Meßsystemen mit abstandscodierten Referenzmarken erfolgt hiermit die Angabe des Grundabstandes der zusammengehörigen Referenzmarken. Bei Meßsystemen ohne abstandscodierten Referenzmarken erfolgt hiermit die Angabe des Abstandes zwischen zwei benachbarten Referenzmarken.

**8. Lage der ersten Referenzmarke**

Gibt die Position der ersten Referenzmarke bezogen auf die Endlage an.

**9. Meßschritt oder Meßschritte**

Gibt bei Längenmeßsystemen den Meßschritt an, der bei der seriellen Datenübertragung vom Meßsystem ausgegeben wird. Bei Winkelmeßsystemen wird die Anzahl an Meßschritten pro Umdrehung angegeben.

**10. Nullpunkt-Verschiebung des Meßsystem-Herstellers**

**11. Dfehrichtung und Codeausgabe bel Codewinkelmeßsystemen**

**12. Identnummer des Meßsystemes**

**13. Seriennummer des Meßsystemes**

**14. Alarme**

Aufgetretene Fehler werden abgespeichert. Ist ein Bit beispielsweise ungleich Null, so wird bei der Übertragung von Meßwerten nach Figur 3 das Alarm-Bit gesetzt. Eine Alarm-Meldung kann auch zur Not-Abschaltung eines Antriebes verwendet werden.

### 15. Warnungen

Werden Toleranzvorgaben für bestimmte interne Größen des Meßsystems überschritten, die zum Ausfall des Meßsystemes führen können, so werden diese in Form von Warnmeldungen abgespeichert und können auf Anforderung ausgelesen werden. Bei batteriebetriebenen Meßsystemen kann eine Warnmeldung beispielsweise das Wort "Batteriewechsel° sein. Warnungen ermöglichen daher eine vorbeugende Wartung.

III. Speicherbelegung Korrekturwerte

1. Anzahl der Korrekturwerte bezogen auf die Meßlänge

2. Anzahl der Korrekturwerte für Signal-Abweichungen wie Signalamplituden, Phasenversatz sowie Nullpunkt-Abweichungen.

3. Anzahl der Korrekturwerte für Oberwellen.

4. Anzahl der zu korrigierenden Oberwellen.

5. Korrekturwerte zu 1.

6. Korrekturwerte zu 2.

7. Korrekturwerte zu 3.

Selbstverständlich liegt es im Rahmen der Erfindung, auch andere Parameter im Speicher 9 für die Verarbeitungseinheit 4 zur Verfügung zu stellen. Bei der Inbetriebnahme erfolgt eine Anpassung der Verarbeitungseinheit 4 durch Übernahme der notwendigen Parameter vom Meßsystem 1 über die Datenleitung 5.

Die Bereiche des Speichers 9 können softwaremäßig aufgeteilt sein, es ist aber auch möglich, daß der Speicher 9 aus mehreren einzelnen Speicherbaueinheiten besteht.

Es ist offensichtlich, daß die erfindungsgemäße Anordnung folgende Vorteile aufweist:

- Einsatz für Code-Meßsysteme und inkrementale Meßsysteme,
- Minimierte Übertragungszeiten für den absoluten Positionswert. Bei Anwendungen im geschlossenen Regelkreis werden dadurch Totzeiten reduziert und ein verbessertes Regelverhalten erreicht,
- Bidirektionale Schnittstelle mit der Möglichkeit, sowohl für den Kunden als auch für den Meßsystem-Hersteller, Parameter im Meßsystem abspeichem und auslesen zu können (Vereinfachung der Inbetriebnahme),

- Unterstützung von Überwachungs- und Diagnosefunktionen der Verarbeitungseinheit,
- Bei absoluten Meßsystemen erfolgt grundsätzlich eine Übertragung vollständiger Absolutwerte im Dual-Code unabhängig von der Art der Bestimmung des absoluten Positionsmeßwertes, wodurch keine unterschiedliche Auswertung in der Verarbeitungseinheit erforderlich ist.
- Das Format zur Übertragung des Positionsmeßwertes ist in seiner Länge variabel und hängt vom jeweiligen Meßsystem ab. Die Festlegung der Anzahl der Takte und die Zuordnung des Positionsmeßwertes zu den Takten erfolgt durch den abzufragenden Inhalt des Speichers im Meßsystem.

Wie aus den vorhergehenden Ausführungen ersichtlich ist, ist es besonders vorteilhaft, wenn der Takt von der Verarbeitungseinheit 4 vorgegeben wird. Hierdurch ist eine synchrone Datenübertragung gewährleistet.

Die Erfindung ist aber auch einsetzbar, wenn der Takt vom Meßsystem 1 vorgegeben wird. Hierbei wird über die Taktleitung 6 von der Verarbeitungseinheit 4 ein Anforderungssignal (Request) an das Meßsystem 1 gesendet. Daraufhin werden synchron zu einem internen Takt die Bits des Positionsmeßwertes seriell über die Datenleitung 5 zu der Verarbeitungseinheit 4 gesendet. Um auch hier eine zum Verarbeitungstakt der Verarbeitungseinheit 4 synchrone Übertragung sicherzustellen, kann der interne Taktgeber des Meßsystems 1 mit einer. Flanke des Anforderungssignals synchronisiert werden. Das Anforderungssignal kann auch über die Datenleitung 5 zum Meßsystem 1 gesendet werden.

Die Erfindung ist bei Winkel- sowie Längenmeßeinrichtungen einsetzbar. Das Abtastprinzip ist nicht auf das lichtelektrische Prinzip beschränkt. Der Code zur Bildung des zu übertragenden Positionsmeßwertes kann in einer einzigen Spur (Kettencode) oder in mehreren Spuren auf einem oder auf mehreren Codeträgem vorgesehen sein.

### Patentansprüche

1. Vorrichtung zur seriellen Datenübertragung zwischen einer Positionsmeßeinrichtung (1) und einer Verarbeitungseinheit (4), wobei

   - die Positionsmeßeinrichtung (1) einen Baustein (2) aufweist, in dem aus den Abtastsignalen zumindest einer Abtasteinrichtung (10) ein die Absolutposition definierendes binäres Codewort gebildet wird;
   - das binäre Codewort einem Ausgabebaustein (3) zuführbar ist, welcher eine bitserielle Übertragung des Codewortes über eine Datenleitung (5) aufgrund eines Befehles (Status) der Verarbeitungseinheit (4) veranlaßt;

- die Positionsmeßeinrichtung (1) mehrere Speicherbereiche (8, 9) aufweist;

- in einem Speicherbereich (9) spezifische Parameter der Positionsmeßeinrichtung (1) abgespeichert sind, welche ebenfalls über die genannte Datenleitung (5) seriell zu der Verarbeitungseinheit (4) übertragbar sind, wodurch die Verarbeitungseinheit (4) an diese Parameter anpaßbar ist;

- ein weiterer Speicherbereich (8) zur Dekodierung von Befehlen (Status) der Verarbeitungseinheit (4) dient, wobei diese Befehle (Status) ebenfalls als binäre Datenwörter seriell auf der genannten Datenleitung (5) der Positionsmeßeinrichtung (1) zuführbar sind;

- ein Taktgeber (15) in der Verarbeitungseinheit (4) angeordnet ist und Taktimpulsfolgen über eine Taktleitung (6) dem Takteingang des Ausgabebausteins (3) zuführbar sind und

- die Positionsmeßwerte und die Parameter taktsynchron zur Taktimpulsfolge bitseriell auf der Datenleitung zu der Verarbeitungseinheit (4) übertragbar sind;

- bei einer Taktflanke der Taktimpulsfolge die Bildung und Abspeicherung des momentanen absoluten Positionsmeßwertes in der Positionsmeßeinrichtung (1) veranlaßt wird und nach einer vom Umfang der Berechnungen abhängigen Rechenzeit (tc) von der Positionsmeßeinrichtung (1) eine Startmeldung (Start) an die Verarbeitungseinheit (4) übertragbar ist, die anzeigt, daß ein gültiger Positionsmeßwert zur Übertragung vorliegt.

2. Vorrichtung nach Anspruch 1, **dadurch gekennzeichnet, daß** im Speicherbereich (9) als spezifischer Parameter die zur Übertragung des Positionsmeßwertes benötigte Information über die Taktanzahl abgespeichert ist.

3. Vorrichtung nach einem der vorhergehenden Ansprüche, **dadurch gekennzeichnet, daß** in einem Speicherbereich (9) Parameter der.Positionsmeßeinrichtung (1) vom Hersteller der Positionsmeßeinrichtung (1) eingespeichert sind und dieser Speicherbereich (9) vom Anwender der Positionsmeßeinrichtung (1) nicht beschreibbar ist.

4. Vorrichtung nach einem der vorhergehenden Ansprüche, **dadurch gekennzeichnet, daß** in der Positionsmeßeinrichtung (1) zumindest ein Speicherbereich (9) mit anwenderspezifischen Parametern vorgesehen ist, der über die Datenleitung (5) Parameter zuführbar sind.

5. Vorrichtung nach einem der vorhergehenden Ansprüche, **dadurch gekennzeichnet, daß** in der Positionsmeßeinrichtung (1) zumindest ein Speicherbereich (9) mit Alarm- und/oder Fehlermeldungen vorgesehen ist, der über die Datenleitung (5) auslesbar ist.

6. Vorrichtung nach einem der vorhergehenden Ansprüche, **dadurch gekennzeichnet, daß** das Signal der Datenleitung (5) im Ruhezustand auf dem Pegel LOW liegt.

7. Verfahren zur seriellen Datenübertragung zwischen einer Positionsmeßeinrichtung (1) und einer Verarbeitungseinheit (4), wobei

- Befehle (Status) von der Verarbeitungseinheit (4) zu der Positionsmeßeinrichtung (1) als Datenwörter bitseriell übertragen werden und die Positionsmeßeinrichtung (1) daraufhin veranlaßt wird, einen Befehl (Status) auszuführen, und in Abhängigkeit des Befehles (Status) einen Positionsmeßwert als binäres Datenwort oder einen in der Positionsmeßeinrichtung (1) abgespeicherten Parameter als binäres Datenwort zu der Verarbeitungseinheit (4) zu senden, wodurch die Verarbeitungseinheit (4) an diesen Parameter anpaßbar ist, oder die Positionsmeßeinrichtung (1) veranlaßt, Parameter von der Verarbeitungseinheit (4) zu empfangen und in einem Speicherbereich (9) abzuspeichern;

- die Befehle (Status), die Parameter und die Positionsmeßwerte auf einer gemeinsamen Datenleitung (5) taktsynchron übertragen werden;

- die Taktimpulsfolge zur taktsynchronen Übertragung von der Verarbeitungseinheit (4) über eine Taktleitung (6) zu der Positionsmeßeinrichtung (1) übertragen wird;

- bei einer Taktflanke der Taktimpulsfolge die Bildung und Abspeicherung des momentanen absoluten Positionsmeßwertes in der Positionsmeßeinrichtung (1) veranlaßt wird und

- nach einer vom Umfang der Berechnungen abhängigen Rechenzeit (tc) von der Positionsmeßeinrichtung (1) eine Startmeidung (Start) an die Verarbeitungseinheit (4) übertragen wird, die anzeigt, dass ein gültiger Positionsmeßwert zur Übertragung vorliegt.

8. Verfahren nach Anspruche 7, **dadurch gekennzeichnet, daß** die Verarbeitungseinheit (4) jeweils ein Bit des Befehls (Status) synchron zu einer fallenden Taktflanke sendet.

9. Verfahren nach einem der Ansprüche 7 oder 8 **dadurch gekennzeichnet, daß** bei einer negativen Taktflanke der Taktimpulsfolge die Analogwerte der Abtasteinrichtung (10) in den Baustein (2) abgespeichert werden und die Bildung und Abspeicherung des momentanen absoluten Positionsmeßwertes in der Positionsmeß-einrichtung (1) veranlaßt wird.

10. Verfahren nach einem der Ansprüche 7 bis 9, **dadurch gekennzeichnet, daß** die Startmeldung (Start) nach der Rechenzeit (tc) synchron zu einer positiven Taktflanke übertragen wird.

11. Verfahren nach einem der Ansprüche 7 oder 10, **dadurch gekennzeichnet, daß**

   - nach der Startmelduhg (Start) eine Alarrmmeldung (Alarm) in Form eines Alarmbits an die Verarbeitungseinheit (4) übertragen wird, das eine Fehlfunktion der Meßeinrichtung (1) an die Verarbeitungseinheit (4) meldet und
   - daß nachfolgend das Datenwort des Positionsmeßwertes an die Verarbeitungseinheit (4) übertragen wird.

12. Verfahren nach einem der vorhergehenden Ansprüche 7 bis 11, **dadurch gekennzeichnet, daß** bei der bitseriellen Übertragung des Positionsmeßwertes zuerst das Least Significant Bit übertragen wird.

13. Verfahren nach einem der vorhergehenden Ansprüche 7 bis 12, **dadurch gekennzeichnet, daß** in der Positionsmeßeinrichtung (1) ein Speicherbereich (9) vorgesehen ist, in dem im Fehlerfall, oder bei Überschreiten vorgegebener Toleranzen eine Fehlerinformation abgespeichert ist, die auf Anforderung der Verarbeitungseinheit (4) ausgelesen wird.

14. Verfahren nach einem der vorhergehenden Ansprüche 7 bis 13, **dadurch gekennzeichnet, daß** nach der Übertragung des Positionsmeßwertes ein Datenwort (CRC) zur Kontrolle des übertragenen Positionsmeßwertes an die Verarbeitungseinheit (4) übertragen wird.

15. Verfahren nach Anspruche 14, **dadurch gekennzeichnet, daß** der Takt nach der CRC-Übertragung bis zur Speicherung eines neuen Positionsmeßwertes aussetzt und vor jeder Übertragung eines Positionsmeßwertes von der Verarbeitungseinheit (4) ein Befehl (Status) gesendet wird.

16. Verfahren nach einem der vorhergehenden Ansprüche 7 bis 15, **dadurch gekennzeichnet, daß** eine Betriebsweise wählbar ist, bei der der Takt ununterbrochen durchläuft und aufgrund eines Befehls (Status) hintereinander mehrere Positionsmeßwerte zu der Verarbeitungseinheit (4) übertragen werden, ohne dazwischen einen Befehl (Status) zur Anforderung von der Verarbeitungseinheit (4) zu übertragen.

17. Verfahren nach einem der Ansprüche 7 bis 16, **dadurch gekennzeichnet, dass**

   - die zur Übertragung eines Positionsmeßwertes notwendige Informationen über die Taktanzahl in der Positionsmeßeinrichtung (1) abgespeichert ist;
   - diese Information von der Verarbeitungseinheit (4) gelesen wird und
   - die erforderliche Anzahl der Takte bei der Meßwertübertragung der Positionsmeßeinrichtung (1) von der Verarbeitungseinheit (4) zur Verfügung gestellt wird.

**Claims**

1. Apparatus for serial transmission of data between a position measuring device (1) and a processing unit (4), wherein

   - the position measuring device (1) comprises a unit (2) in which a binary code word defining the absolute position is formed from the sensing signals of at least one sensing device (10);
   - the binary code word can be fed to an output unit (3) which causes bit-serial transmission of the code word over a data line (5) in response to a command (Status) from the processing unit (4);
   - the position measuring device (1) comprises a plurality of memory regions (8, 9);
   - specific parameters of the position measuring device (1) are stored in one memory region (9) and can likewise be transmitted serially over the said data line (5) to the processing unit (4), whereby the processing unit (4) can be matched to these parameters;
   - a further memory region (8) serves for decoding commands (Status) from the processing unit (4), these commands (Status) likewise being capable of being transmitted serially as binary data words over the said data line (5) to the position measuring device (1);
   - a clock source (15) is provided in the processing unit (4) and clock pulse sequences can be fed over a clock line (6) to the clock input of the output unit (3) and
   - the position measurement values and the parameters can be transmitted bitserially over the data line to the processing unit (4) in clock synchronism with the clock pulse sequence;
   - the formation and storage of the instantaneous absolute position measurement value in the position measuring device (1) is triggered on one clock flank of the clock pulse sequence and
   - after a computing time (tc) dependent on the scope of the computations, a start message (Start) can be transmitted from the position measuring device (1) to the processing unit (4), indicating that a valid position measurement value is present for transmission.

2. Apparatus according to claim 1, **characterized in that** the information as to the clock number required for the transmission of the position measurement value is stored as a specific parameter in the storage region (9).

3. Apparatus according to any of the preceding claims, **characterized in that** parameters of the position measuring device (1) are stored in one memory region (9) by the manufacturer of the position measuring device (1) and this memory region (9) cannot be written to by the user of the position measuring device (1).

4. Apparatus according to any of the preceding claims, **characterized in that** at least one memory region (9) is provided in the position measuring device (1) with user-specific parameters, which can be transmitted over the data line (5).

5. Apparatus according to any of the preceding claims, **characterized in that** at least one memory region (9) is provided in the position measuring device (1) with alarm and/or error messages, which can be read over the data line (5).

6. Apparatus according to any of the preceding claims, **characterized in that** the signal on the data line (5) is at the LOW level in the rest state.

7. A method of serial transmission of data between a position measuring device (1) and a processing unit (4), wherein

   - commands (Status) are transmitted bit serially as data words from the processing unit (4) to the position measuring device (1) and the position measuring device (1) is thereupon caused to execute a command (Status) and, in dependence on the command (Status) to send to the processing unit (4) a position measurement value as a binary data word or a parameter stored in the position measuring device (1) as a binary data word, whereby the processing unit (4) can be matched to this parameter, or the position measuring device (1) is caused to receive parameters from the processing unit (4) and to store them in a memory region (9);
   - the commands (Status), the parameters and the position measurement values are transmitted on a common data line (5) in clock synchronism;
   - the clock pulse sequence for the clock synchronous transmission is transmitted from the processing unit (4) to the position measuring device (1) over a clock line (6);
   - the formation and storage of the instantaneous absolute position measurement value is triggered in the position measuring device (1) on one clock flank of the clock pulse sequence and
   - after a computing time (tc) dependent on the scope of the computations, a start message (Start) is transmitted from the position measuring device (1) to the processing unit (4), indicating that a valid position measurement value is present for transmission.

8. A method according to claim 7, **characterized in that** the processing unit (4) transmits each bit of the command (Status) in synchronism with a falling clock flank.

9. A method according to claim 7 or 8, **characterized in that** the analog values of the sensing device (10) are stored in the unit (2) on a negative clock flank of the clock pulse sequence and the formation and storage of the instantaneous absolute position measurement values is triggered in the position measuring device (1).

10. A method according to any of claims 7 to 9, **characterized in that** the start message (Start) is transmitted in synchronism with a positive clock flank after the computing time (tc).

11. A method according to any of claims 7 to 10, **characterized in that**

   - after the start message (Start) an alarm message (Alarm) in the form of an alarm bit is transmitted to the processing unit (4), informing the processing unit (4) of an error function of the measuring device (1), and
   - the data word of the position measurement value is subsequently transmitted to the processing unit (4).

12. A method according to any of the preceding claims 7 to 11, **characterized in that** the least significant bit is transmitted first in the bit-serial transmission of the position measurement value.

13. A method according to any of the preceding claims 7 to 12, **characterized in that** a memory region (9) is provided in the position measuring device (1), in which error information is stored for the case of error or on overstepping predetermined tolerances, which information is read on request by the processing unit (4).

14. A method according to any of the preceding claims 7 to 13, **characterized in that** a data word (CRC) for checking the transmitted position measurement value at the processing unit (4) is transmitted after the transmission of the position measurement value.

15. A method according to claim 14, **characterized in that** the clock stops after the CRC transmission up to storage of a new position measurement value and a command (Status) is transmitted before each transmission of a position measurement value from the processing unit (4).

16. A method according to any of the preceding claims 7 to 15, **characterized in that** a mode of operation can be selected in which the clock runs without interruption and in response to a command (Status) a plurality of position measurement values are transmitted to the processing unit (4) one after the other, without a command (Status) being transmitted in between at the request of the processing unit (4).

17. A method according to any of claims 7 to 16, **characterized in that**

    - the information as to the clock number required for the transmission of a position measurement value is stored in the position measuring device (1);
    - this information is read by the processing unit (4)
    - the required number of clock pulses for the measured value transmission is made available from the processing unit (4) to the position measuring device (1).

## Revendications

1. Dispositif pour la transmission de données en série entre un dispositif de mesure de position (1) et une unité de traitement (4), dans lequel

    - le dispositif de mesure de position (1) comprend un composant (2) dans lequel un mot codé binaire définissant la position absolue est formé à partir des signaux d'exploration d'au moins un dispositif d'exploration (10),
    - le mot codé binaire peut être amené à un composant d'émission (3) qui provoque une transmission en série par bit du mot codé par une ligne de données (5) en réponse à un ordre (Status) de l'unité de traitement (4),
    - le dispositif de mesure de position (1) comprend plusieurs zones de mémoire (8, 9),
    - une zone de mémoire (9) sert à la mémorisation de paramètres spécifiques du dispositif de mesure de position (1), lesquels peuvent également être transmis en série par ladite ligne de données (5) à l'unité de traitement (4), de sorte que l'unité de traitement (4) peut être adaptée à ces paramètres,
    - une zone de mémoire (8) supplémentaire sert au décodage d'ordres (Status) de l'unité de traitement (4), ces ordres (Status) pouvant également être amenés en tant que mots de données binaires en série par ladite ligne de données (5) au dispositif de mesure de position (1),
    - un générateur d'horloge (15) est prévu dans l'unité de traitement (4) et les trains d'impulsions d'horloge peuvent être amenés par une ligne d'horloge (6) à l'entrée d'horloge du composant d'émission (3),
    - les valeurs de mesure de position et les paramètres peuvent être transmis en synchronisme avec le train d'impulsions d'horloge en série par bit sur la ligne de données à l'unité de traitement (4),
    - la formation et la mémorisation de la valeur de mesure de position absolue momentanée dans le dispositif de mesure de position (1) sont déclenchées par un flanc d'impulsion d'horloge du train d'impulsions d'horloge,
    - après un temps de calcul (tc), qui dépend du volume des calculs, une signalisation de départ (Start) est transmise du dispositif de mesure de position (1) à l'unité de traitement (4), qui indique qu'une valeur de mesure de position valide est prête pour transmission.

2. Dispositif suivant la revendication 1, **caractérisé par le fait que** dans la zone de mémoire (9) est mémorisé, en tant que paramètre spécifique, l'information concernant le nombre d'impulsions d'horloge, nécessaire pour la transmission de la valeur de mesure de position.

3. Dispositif suivant l'une des revendications précédentes, **caractérisé par le fait que** des paramètres du dispositif de mesure de position (1) sont mémorisés dans une zone de mémoire (9) par le fabricant du dispositif de mesure de position (1) et que l'utilisateur du dispositif de mesure de position (1) n'a pas accès, à des fins d'inscription, à cette zone de mémoire (9).

4. Dispositif suivant l'une des revendications précédentes, **caractérisé par le fait que** dans le dispositif de mesure de position (1) est prévue au moins une zone de mémoire (9) avec des paramètres spécifiques de l'utilisateur, zone à laquelle les paramètres peuvent être amenés par la ligne de données (5).

5. Dispositif suivant l'une des revendications précédentes, **caractérisé par le fait que** dans le dispositif de mesure de position (1) est prévue au moins une zone de mémoire (9) avec des signalisations d'alarme et/ou d'erreur, zone qui peut être lue en passant par la ligne de données (5).

6. Dispositif suivant l'une des revendications précédentes, **caractérisé par le fait que** le signal de la ligne de données (5) se trouve au niveau bas (LOW) à l'état de repos.

7. Procédé pour la transmission de données en série entre un dispositif de mesure de position (1) et une unité de traitement (4), selon lequel

   - des ordres (Status) sont transmis en série par bit en tant que mots de données de l'unité de traitement (4) au dispositif de mesure de position (1) et le dispositif de mesure de position (1) est amené, en réponse à cette transmission, à exécuter un ordre (Status) et, en fonction de l'ordre (Status), à émettre une valeur de mesure de position en tant que mot de données binaire ou un paramètre mémorisé dans le dispositif de mesure de position (1) en tant que mot de données binaire à l'unité de traitement (4), de sorte que l'unité de traitement (4) peut être adaptée à ce paramètre, ou amène le dispositif de mesure de position (1) à recevoir des paramètres de l'unité de traitement (4) et à les mémoriser dans une zone de mémoire (9),
   - les ordres (Status), les paramètres et les valeurs de mesure de position sont transmis en synchronisme avec l'horloge sur une ligne de données commune (5)
   - le train d'impulsions d'horloge pour la transmission en synchronisme est transmis de l'unité de traitement (4) par une ligne d'horloge (6) au dispositif de mesure de position (1)
   - la formation et la mémorisation de la valeur de mesure de position absolue momentanée dans le dispositif de mesure de position (1) sont déclenchées par un flanc d'impulsion d'horloge du train d'impulsions d'horloge,
   - après un temps de calcul (tc), qui dépend du volume des calculs, une signalisation de départ (Start) est transmise du dispositif de mesure de position (1) à l'unité de traitement (4), qui indique qu'une valeur de mesure de position valide est prête pour transmission.

8. Procédé selon la revendication 7, **caractérisé par le fait que** l'unité de traitement (4) émet chaque fois un bit de l'ordre (Status) en synchronisme avec un flanc descendant.

9. Procédé selon une des revendications 7 ou 8, **caractérisé par le fait qu'**à un flanc négatif du train d'impulsions d'horloge les valeurs analogiques du dispositif d'exploration (10) sont mémorisées dans le composant (2) et la formation et la mémorisation de la valeur de mesure de position absolue instantanée dans le dispositif de mesure de position sont.

10. Procédé selon une des revendications 7 à 9, **caractérisé par le fait que** la signalisation de départ (Start) est transmise après le temps de calcul (tc), en synchronisme avec un flanc d'impulsion d'horloge positif.

11. Procédé selon une des revendications 7 ou 10, **caractérisé par le fait**

   - **qu'**après la signalisation de départ (Start), une signalisation d'alarme (Alarrn) sous la forme d'un bit d'alarme est transmise à l'unité de traitement (4), et un dysfonctionnement du dispositif de mesure (1) est signalé à l'unité de traitement (4),
   - le mot de données de la valeur de mesure de position est ensuite transmis à l'unité de traitement (4).

12. Procédé selon une des revendications 7 à 11, **caractérisé par le fait que** lors de la transmission en série par bit de la valeur de mesure de position, le bit de poids le plus faible est transmis en premier.

13. Procédé selon une des revendications 7 à 12, **caractérisé par le fait qu'**il est prévu dans le dispositif de mesure (1), une zone de mémoire (9) dans laquelle est mémorisée, en cas d'erreur ou en cas de dépassement de tolérances prédéterminées, une information d'erreur qui est lue sur appel de l'unité de traitement (4).

14. Procédé selon une des revendications 7 à 13, **caractérisé par le fait qu'**après la transmission de la valeur de mesure de position, un mot de données (CRC), pour le contrôle de la valeur de mesure de position transmise, est transmis à l'unité de traitement (4).

15. Procédé selon la revendication 14, **caractérisé par le fait que** l'impulsion d'horloge après la transmission du mot de données (CRC) est supprimée jusqu'à la mémorisation d'une nouvelle valeur de mesure de position et, avant chaque transmission d'une valeur de mesure de position, un ordre (Status) est envoyé par l'unité de traitement (4).

16. Procédé selon une des revendications 7 à 15, **caractérisé par le fait qu'**un mode de fonctionnement peut être sélectionné dans lequel les impulsions d'horloge se déroulent sans interruption et sur la base d'un ordre (Status) plusieurs valeurs de mesure de position sont transmises les unes à la suite des autres à l'unité de traitement (4) sans transmission intermédiaire d'un ordre (Status) d'appel de l'unité de traitement (4).

**17.** Procédé selon une des revendications 7 à 16, **caractérisé par le fait que**

> - les informations nécessaires à la transmission d'une valeur de mesure de position sur le nombre d'impulsions d'horloge sont mémorisées dans le dispositif de mesure de position (1),
> - cette information est lue par l'unité de traitement (4) et
> - le nombre nécessaire d'impulsions d'horloge pour la transmission de la valeur de mesure du dispositif de mesure (1) est mis à disposition par l'unité de traitement (4).

FIG. 1

| Status | S2 | S1 | S0 |
|--------|----|----|----|
| A | 0 | 0 | 0 |
| B | 0 | 0 | 1 |
| C | 0 | 1 | 1 |
| D | 1 | 0 | 0 |
| E | 1 | 0 | 1 |
| F | 0 | 1 | 0 |
| G | 1 | 1 | 0 |
| H | 1 | 1 | 1 |

# FIG. 2

Sender im Meßsystem inaktiv

Sender im Meßsystem aktiv

Empfänger im Meßsystem aktiv

Status | 8 bit | 16 bit | Start | 8 bit | 16 bit | 8 bit CRC

| | | | | | | | | |
|---|---|---|---|---|---|---|---|---|
| Meßsystem inaktiv | 0 0 1 | memory range select | 16 bit | | | memory range select | 16 bit | quitieren |
| Meßsystem inaktiv | 0 1 1 | Adresse | Parameter | | | Adresse | Parameter | |
| Meßsystem aktiv | 1 0 0 | Adresse | beliebig | | | Adresse | Parameter | |

EP 0 660 209 B2

FIG. 3

Neuen Meßwert
speichern

T=1/f
Takt    Meßwert    cyclic redundance check    t_m    t_c

t_c

Takt.

Daten

$2^n$  $2^{n-1}$    $2^1$  $2^0$  $2^7$  $2^6$  $2^5$  $2^4$  $2^3$  $2^2$  $2^1$  $2^0$    $2^n$

MS inaktiv

Start Alarm MSB    LSB CRC CRC CRC CRC CRC CRC CRC CRC    Start Alarm MSB

Status

S2 S1 S0    S2 S1 S0

MS empfängt Daten

Meßwerte speichern

## FIG. 4

Positionswert·
speichern

Meßsystem
übernimmt
Status-Befehl

$t_c$

Positionswert   Cyclic Redundance Check

Takt

Daten

Status

S2 S1 S0 $\overline{S2}$ $\overline{S1}$ $\overline{S0}$

Folge-Elektronik sendet
Status-Befehl

## FIG. 5

Neuen Positionswert
speichern

Takt

Daten

Status

S2 S1 S0 $\overline{S2}$ $\overline{S1}$ $\overline{S0}$

## FIG. 6

Takt

Daten

$t_c$

Neuen Positionswert
speichern

# FIG. 7